(19) Europäisches Patentamt / European Patent Office / Office européen des brevets

(11) **EP 2 731 062 A1**

(12) **EUROPEAN PATENT APPLICATION**

(43) Date of publication:
**14.05.2014 Bulletin 2014/20**

(51) Int Cl.:
***G06N 5/02*** *(2006.01)*

(21) Application number: **12191695.1**

(22) Date of filing: **07.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FUJITSU LIMITED**
**Kawasaki-shi,**
**Kanagawa 211-8588 (JP)**

(72) Inventors:
• **Hu, Bo**
**Huntingdon, Cambridgeshire PE29 6JL (GB)**
• **Laera, Loredana**
**Hayes, Middlesex UB4 8FE (GB)**

(74) Representative: **Hutchison, James**
**Haseltine Lake LLP**
**300 High Holborn**
**London, Greater London WC1V 7JH (GB)**

Remarks:
Amended claims in accordance with Rule 137(2) EPC.

(54) **Method and apparatus for ontology mapping**

(57)     Embodiments of the present invention include a method for assessing the similarity of two concepts from different ontologies, the method comprising: for each concept being assessed: obtaining a core list comprising a label of the concept and each concept that is a parent or ancestor of the concept; and performing a generalisation process. The generalisation process includes: querying a document corpus with each of the labels from a list, and obtaining a query result identifying the one or more most relevant documents; compiling a textual description of the concept by obtaining at least a portion of each of one or more of the most relevant documents; and identifying a set of most significant terms in the textual description, wherein, the list in the performing of the generalisation process is the core list, The method further comprises: performing a comparison of the sets of most significant terms of the two concepts to obtain an indication of the similarity between the two concepts.

FIGURE 2

**Description**

This invention lies in the field of applications in the semantic web, and in particular relates to ontology mapping, a process which may be practiced, for example, in the Open Linked Data (LOD) initiative. Ontology mapping enables a common format to be applied to ontologies developed independently but representing the same or closely related knowledge domain. This invention addresses one of the most fundamental issues when linking together more than one ontology independently modelled by different individuals or groups of ontologists or knowledge engineers: semantic alignment.

Linked data is intended to define a set of standards and best practices for publishing and linking structured data on the Web. Linked data extends the web by providing semantic mark-up of data, using RDF (a simple graph-based data model), designed specifically for use in the context of the Web. LOD envisages a network of knowledge with data semantically annotated using the so-called ontologies which are readable and understandable by both human inspectors and machines.

Open Linked Data (LOD) is a paradigm in which linked data from a variety of sources is made available to applications, thus, for the purposes of this document, "linked data" and "Open Linked Data" or "LOD" may be used more or less interchangeably.

At the heart of LOD is the Resource Description Framework, RDF, a simple graph-based data modelling language providing semantic mark-up of data. With RDF, LOD tries to piece data silos together and transform the current archipelagic data landscape into a connected data graph upon which complicated data analytics and business intelligence applications can be built.

Since the very early ontology-based applications, the multilingual problem, common in computational linguistic communities, has existed. This is mainly due to the fact that entities and relationships in an ontology model bear the naming and modelling conventions that are unique to individual knowledge engineers. The situation is exacerbated when many ontologies are developed for specific applications, bearing the signatures that are particular to the target application. Ontology mapping/alignment, therefore, has been a long standing research topic for the knowledge management community in the past and the semantic web as well as the linked data community in the present.

Ontology alignment has been referred to using different names, e.g. semantic alignment, ontology mapping/matching, etc. Existing approaches can be roughly grouped in three categories:

There are efforts to define the so-called all-in-one ontologies that are considered as the "mother" of all application- and domain-specific ontologies. The intention is that all the other ontologies can follow the standards put forward by this global ontology and thus semantic discrepancies are eliminated. Although some successful stories were demonstrated in biology and medicine domains, there are evident disadvantages. The overhead of this approach is extremely high as it is difficult to reach a consensus among even the ontologists committed to constructing the ontology. This becomes more difficult when the consensus is sought among the entire community. Even if an agreement can be negotiated, it hardly covers the requirements of every ontology-based application and it is not possible to frequently update the global model to reflect new discoveries.

To circumvent the difficulties in constructing global ontologies, another category of approach focusing on more manageable reference ontologies was introduced. This category of approach is known as upper ontologies. Upper ontologies aims to develop anchors to which domain or application ontologies can refer. Ontology alignment is then achieved through referring to common entities in the upper ontology with or without logic deduction. This approach still presents all the maintenance and design-time problems as the big, global ontologies, only in a smaller scale.

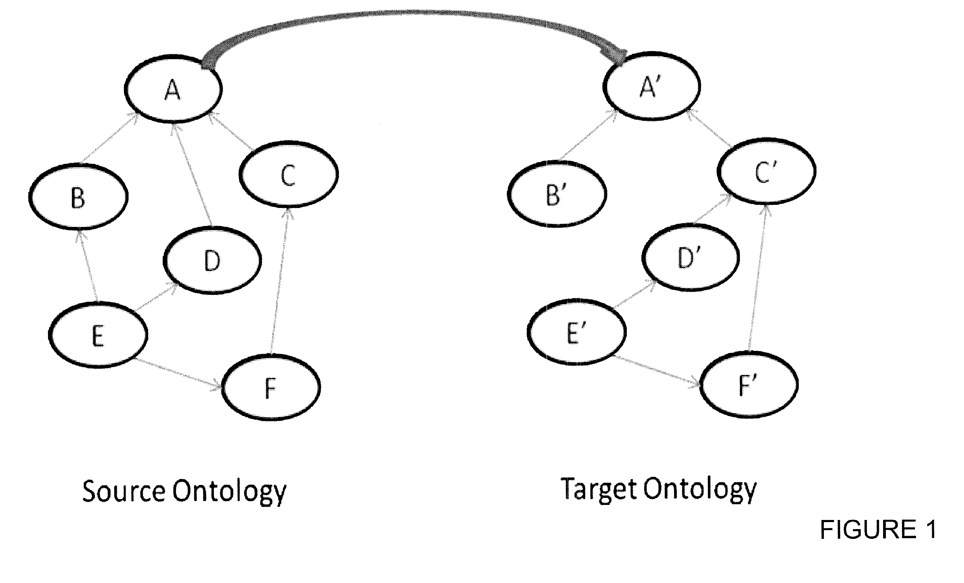

A third category of approach and currently a more common practice in the linked data community is leveraging ontology mapping/schema matching algorithms to discover similar entities from two ontologies when semantic alignment of ontologies (an alternative name for ontology mapping or ontology alignment) becomes necessary. Figure 1 illustrates how ontology alignment works. Given one source ontology and one target ontology, ontology mapping tries to find, for a concept from the source ontology, the corresponding concept from the target ontology which satisfies one of the following requirements: let $s$ be the concept from source ontology and $t$ an arbitrary concept from target ontology:

    1. $s$ and $t$ are semantically equivalent; or
    2. $s$ and $t$ are sufficiently similar with a similarity value greater than those between $s$ and any other concepts from the target ontology.

In practice, a whole raft of technologies can be used to find $t$. Commonly used ones can be categorised into intension-based, extension-based, and hybrid. Intension-based methods are those that leverage the semantic constraints (also referred to as the structural information) stated on the entities in the ontology itself, while extension-based exploit instance data that are already known at the time of mapping. That is, extension-based technologies analyse which data items have been categorised against a particular concept from the ontology. For all the categories, algorithms such as String Edit Distance, Tree Edit Distance, Graph Distance and Logic Inference are the critical enabling techniques for computing either a numeric similarity value or a logic relation between two concepts.

Ontology alignment is one of the enabling technologies for LOD. This is evidenced by the fact that LOD sets out to link data from different domains, collected or categorised/characterised against different domain knowledge models (mainly ontologies). Ontology alignment can provide data interoperability and facilitate communications between systems/communities based on different ontologies.

Semantic web and the Linked Open Data (LOD) initiative emphasise data sets annotated by predefined schemata (in terms of ontologies) which are machine-understandable. There exists a proliferation of schemata and ontologies, using different models and languages. The implication of such a vision is evident: multiple schemata/ontologies should be able to align with each other to ensure data interoperability and smooth transition from one data model to another. The process of identifying correspondences across different data models is called schema matching, ontology matching, ontology alignment, ontology mapping, or semantic alignment, and these terms are used interchangeably. While ontology mapping has been studied extensively in the past decade or so, the LOD context has certainly brought along with it new challenges and requirements that do not normally present in conventional ontology-mapping scenarios and, where the conventional approaches could fail to be successful.

Embodiments of the present invention are provided in view of the challenges presented by the linked data initiative and the proliferation of published linked data.

Embodiments of the present invention include a method for assessing the similarity of two concepts from different ontologies, the method comprising: for each concept being assessed: obtaining a core list comprising a label of the concept and each concept that is a parent or ancestor of the concept; and performing a generalisation process. The generalisation process includes: querying a document corpus with each of the labels from a list, and obtaining a query result identifying the one or more most relevant documents; compiling a textual description of the concept by obtaining at least a portion of each of one or more of the most relevant documents; and identifying a set of most significant terms in the textual description, wherein, the list in the performing of the generalisation process is the core list. The method further comprises: performing a comparison of the sets of most significant terms of the two concepts to obtain an indication of the similarity between the two concepts.

Advantageously, embodiments of the present invention provide a process for comparing concepts from different ontologies which is automated and which has a low computational cost in comparison with known techniques. Embodiments ignore instance data and structural information in order to build up a list of terms based on the name of a concept and the names of parent and ancestor concepts. The inventors have come to the surprising realisation that, if steps are taken to generalise the name of a concept and the names of parent and ancestor concepts, it is possible to ignore much of the associated information derivable from the ontology, and to still obtain a useful and accurate assessment of the similarity between two concepts from different ontologies.

Ignoring property restriction is beneficial under both theoretical and practical considerations. On the one hand, compared to concepts, property restrictions are semantics-bearing entities that are most affected by the variances in modelling conventions. Naming of properties can be arbitrary and vary from verbs (e.g. "contains"), to extended noun phrases (e.g. "hasfirstnameasstring"). It might mislead automated semantic alignment algorithms. Also, properties can vary in granularity. For instance, properties from one ontology can be broken down into sub-properties from another and properties can be created arbitrarily and become application-specific, resulting in bias in the alignment process. On the other hand, pulling property restrictions requires traversing up along the inheritance hierarchies. This situation is aggravated with inverse and transitive properties and even simply the presence of concrete data type properties. This is expensive and time consuming at runtime and becomes less favourite when matching large scale ontologies on the fly. Even if one can tolerate the time and resources needed for pulling property restrictions, some properties might not carry valuable information for scoping the semantics of the concepts that they are associated with. For instance, a common modelling practice is to restrict concept "Bird" with "hasWings" or concept "Company" with "hasRegisteredAudress". While such restrictions serve as a standard template for collecting data, they contribute very little to unveiling the meaning of a concept (which in these cases is evident from the concept names). Matching properties is almost irrelevant; in most cases, the same concepts are expressed in different terms for properties.

Ignoring instances is based on similar considerations. Firstly, the sheer size of instance data means that any mechanisms aiming at processing them are time-consuming and resource intensive. Secondly, instances can be domain and application specific. Relying on instance data might result in too much noise in the result of ontology mapping. Thirdly, data quality is probably at the worst level with respect to instance data. When examining existing ontologies, it is not a surprise to find that various names and acronyms are used to refer to the same instance, incomplete instantiation with only instance names or labels, and wrongly classified instances.

The inventors have identified several critical and interrelated challenges that are partially or completely overcome or mitigated by embodiments of the present invention:

Lack of quality control - The emphasis of data transparency and fast responsiveness has consequently led to a tendency to release ontologies and associated instance data quickly, inevitably sacrificing quality to a greater or lesser degree. Therefore, there are many ontologies published on the Internet that are of poor quality, and which do not comply with negotiated standards or best practices. Furthermore, there are many ontologies published by domain experts whose understanding of the domain represented by an ontology is extensive, but whose understanding of knowledge representation formalisms, such as ontologies, might be limited. Even though there are efforts to reinforce a quality control over the published ontologies (e.g. OBO Initiative), knowledge modelling is a very subjective task and is hard to standardise. The lack of quality control means that conventional approaches to ontology mapping that focus on structural information of an ontology cannot be efficiently used in the LOD context. Structural matching algorithms operate on the hierarchical and conceptual relationships. They assume that the ontological structure is well constructed, well formed, and comparable.

Scalability - Scalability is a desirable feature in the industrialisation of ontology mapping and it is a particularly important feature in the LOD context. LOD ontologies exist which contain thousands of ontological entities and that are populated with thousands and tens of thousands of instances. The sheer size of such data sets puts an unprecedented challenge on mapping algorithms and makes instance matching and structural matching approaches unfeasible due to the computational cost. Instance matching suffers from a scalability problem in matching large sets of instances and hence tends to be inefficient in the LOD environment. Moreover, structure-based matching, which may involve comparing graphs, paths, adjacent nodes and taxonomies, are computationally expensive to perform.

Incompleteness - Different LOD ontologies for a particular domain might not maintain the same level of completeness. This causes problems when conceptual structures are considered as the ground truth (fundamental ontological components) during semantic alignment - initial alignment might be invalidated by subsequent addition and modification to an ontology.

Rigidity - due to the potential for low quality in concept modelling, structure based approaches might differentiate largely similar concepts with only minor differences. This will falsely enlarge the dissimilarity and thus bias the alignment results.

Advantageously, embodiments of the present invention are automated. It is impractical to manual identify the corresponding entities for very large ontologies, in particular when supporting data interoperability on the fly. Automation is realised by invention embodiments and hence to a certain extent processing in quasi-real time is enabled.

Embodiments of the present invention minimise or remove entirely the need to query structural information at run time. Retrieving structural information is time consuming and computationally expensive due to the cost of graph traversal.

Ontologies published on the internet are not subject to rigorous quality control and can have inconsistent naming and modelling conventions, and be published in different languages. Advantageously, embodiments of the present invention play down the role of syntax (principle and format of language arrangements) in ontology mapping and data reconciliation and instead emphasise the importance of implicit semantics that are not evident from, or reliant upon, syntactic features.

Advantageously, embodiments of the present invention provide a process for ontology mapping which is not based upon existing sets of instances categorised against the ontologies. A consequence of ontology mapping is the ability to merge different sets of instance data. Conventional instance-based mapping approaches require alignment of all the instance data before concepts from different ontologies can be compared. Of course, such approaches place the effect before the cause, which leads to inefficient use of computing resources. Moreover, instance data might be incomplete and mislead alignment/mapping algorithms.

Embodiments of the present invention are applicable in the field of linked data applications. They provide an enabling technology for resolving heterogeneity in the intended semantic of data (annotated with ontologies) that is exchanged when data sets are linked together. The technology provided by invention embodiments can be applied to the alignment of ontologies and data schemata of any size, and thus offer a solution to data interoperability in general.

Optionally, the document corpus may be multilingual. Alternatively or additionally, a lookup to a multilingual dictionary resource can be performed to add translations of terms to the set of most significant terms.

Optionally, identifying a set of most significant terms may include: calculating a numerical score representing the significance of terms in the textual description; and compiling a vector of terms including each of the most significant terms identified in the textual description in association with their respective numerical scores.

Advantageously, a vector represents a format for storing and assessing the concepts which allows for ease of storage and fast and accurate assessment processing. For example, vectors can be assessed against one another geometrically.

A particular group of embodiments may include scoring each of the terms numerically, or using some other metric, in order to quantify the relevance of each term in the vector of terms to the semantic of the label of the concept to which the terms pertains. The quantifying of the significance of the terms enables the terms to be weighted, so that the extent of their similarity to terms from the vector of terms against which they are being assessed will carry more or less importance to an overall assessment of the similarity between the two concepts in dependence upon the combined weights of the two terms being assessed.

Optionally, when the textual description of the concept is compiled, if the document is linked to an equivalent document in a different natural language, then the equivalent document, or a portion thereof, is added to the textual description.

Advantageously, compiling the textual description as described above provides a mechanism to overcome, or reduce the impact of, the multilingual problem in ontology mapping.

As an optional implementation of the numerical score concept, the numerical score may be based on a term frequency-inverse document frequency assessment, wherein the significance of the term is assessed by measuring the frequency of its usage in the textual description relative to the frequency of its usage in the document corpus as a whole.

Term frequency-inverse document frequency provides a simple to implement and efficient to process technique for calculating the significance of terms.

Optionally, the labels are attributed a weight in dependence upon the position of the concept to which they belong relative to the concept being assessed in an ancestry hierarchy of the concept being assessed; each component document portion of the textual description is associated with the weight attributed to the label with which the document corpus was queried to return that particular document portion, or a sum of the weights if the same document portion was returned more than once; and when calculating the term frequency-inverse document frequency for a term, the term frequency count is increased by an amount proportional to the associated weight or sum of weights of the document portion in which the term appears.

Furthermore, latent semantic analysis may be performed to modify the numerical scores.

Latent semantic analysis is an established technique for quantifying the importance of terms in a collection of documents, in this case the collection of documents is the portions of documents that are compiled to produce the textual description. Latent semantic analysis improves the accuracy of the weightings applied to the terms so that similar terms (for example, polynyms or synonyms) are identified and the importance of the similar terms as a group is taken into account in the weighting. For example, latent semantic analysis may include assembling a matrix of terms and the document portions in which they appear, populating the matrix with tf-idf weightings (for the frequency of usage of the term in the document portion relative to the frequency of usage of the term in the document corpus as a whole or the textual description as a whole), and applying rank lowering to the matrix to find a low rank approximation.

Optionally, compiling the vector of terms may include finding the synonyms of each of the most significant terms and including the synonyms in the vector of terms.

Advantageously, including the synonyms for each term in the vector of terms, and including the synonyms, provides another degree of generalisation, which helps to lessen the influence of local naming conventions and further reduce the domain or ontology specificity of the vector of terms. Finding the synonyms may include querying a thesaurus or dictionary (possibly via an application programming interface) stored locally or remotely with each term in the vector of terms and specifying that the query should be responded to with synonyms, and adding any results not already in the vector of terms to the vector of terms.

Once compiled, the respective vectors of terms for the two concepts may be compared by a geometrical comparison.

Advantageously, a geometrical comparison of two vectors of terms provides a computationally efficient way of comparing two concepts. The geometrical comparison compares each term in one vector with each term in the other vector, and generates a score quantifying the similarity between the two terms, possibly weighted according to the significance weighting of the two terms in their respective vectors. An overall assessment of the similarity between the two vectors can then be calculated, for example, by summing, averaging, weight-averaging, or some other process for combining the results of the individual term comparisons. A particular example of a geometrical comparison is a simple cosine similarity, which generates a score between 0 and 1 for each term comparison, 0 being completely different and 1 being the same.

In terms of an overall process utilising the techniques of invention embodiments, embodiments may further include receiving a copy of the two different ontologies as a source ontology and a target ontology, and assessing the similarity of each concept in the source ontology against each concept in the target ontology in order to identify, for each concept in the source ontology, the most similar concept in the target ontology.

Methods embodying the present invention may be part of a process of matching an ontology to another ontology, or may be the entire process of matching two ontologies. Embodiments of the present invention are scalable and the performance benefits compared with existing techniques actually increase as the ontology size increases.

Depending on the requirements of the particular implementation scenario, invention embodiments may include compiling an extended list comprising the core list in addition to a label of each concept that is a neighbour of the concept.

The extended list may be used in a number of ways. For example, if the indication of the similarity between the two concepts satisfies a predetermined criterion, the method may further comprise for each concept being assessed: performing the generalisation process with the extended list as the list, to identify an extended set of most significant terms; and performing a comparison of the extended sets of most significant terms of the two concepts to obtain a further indication of the similarity between the two concepts.

Obtaining the extended list provides a means for a staggered or multi-stage assessment of similarity. The extended list involves more time and computational cost in compiling than the core list, and will add more work at each stage, for example, the number of labels in the extended list will be longer than in the core list, the vector of terms corresponding to the extended list will be longer than that corresponding to the core list and so on. However, by virtue of being longer and incorporating more information from the ontology in which the concept exists, assessing similarity of two concepts on the basis of their respective extended lists can yield a more accurate assessment of the similarity between the concepts.

Optionally, the ontologies are stored at storage units as graph databases, with each concept corresponding to a node of the graph database, and either or both of the core list and the extended list for each concept is stored at the corresponding node of the graph database.

Advantageously, storing the core list and/or the extended list at the node, for example, as cached data, enables assessments of similarity between two concepts from different ontologies to be carried out very quickly. The process is able to proceed without the need to find strctural information from the ontology at run time of the assessment process, thus avoiding the need for costly (in terms of time) graph traversals. Embodiments of the present invention may include methods and apparatuses for ontology storage in which the node corresponding to a particular concept includes cache storage on which a list of the labels of the parent and ancestor concepts to the particular concept is stored as a core list, and alternatively or additionally an extended list is stored thereon which includes, in addition to the core list, the labels of the neighbouring concepts to the particular concept.

Advantageously, embodiments in which the core list and/or extended list are cached or otherwise stored at the node provide a mapping process which does not rely on querying structural information at runtime. Retrieving structural information, in terms of parent concepts, child concepts, sibling concepts, and defined properties, is time consuming and can be very expensive due to the cost of graph traversal.

As an optional extension to the generalisation process, the generalisation process may further include: prior to the querying, performing a cleansing step including removing syntax and context information from the labels.

Depending on the implementation, it may be that concept labels include more information than the semantic information. For example, there may be syntax information and context information, which is removed from the labels in the list, so that the list includes only the semantic information, or the local name part, of the label. Advantageously, embodiments of the present invention provide a more efficient process for assessing similarities between concepts from different ontologies by ignoring some available information and focussing on the names of the concepts and their related (parent/ancestor/neighbouring/child) concepts. To this end, some processing of the labels may be included in the process to remove information other than the semantic of the concept name.

As a further optional extension, querying the document corpus may include: querying the document corpus with each of the labels from the list individually, and, for each label, obtaining a query result identifying the one or more most relevant documents; and consolidating the query results and identifying the one or more most relevant documents to the concept being assessed.

The above process is a particular implementation of the method, and may be useful, for example, if latent semantic analysis is to be performed, since it enables documents to be assembled on a per-term basis, and then a matrix to be built up of each document (or document portion) and the significance of each term in each document.

Furthermore, querying the document corpus may include querying the document corpus with each of the labels from the list concatenated in a single query.

The choice of query format will depend on the implementation details of the embodiment. The two different query formats set out above may be used exclusively or in combination with one another. Advantageously, concatenating the terms into a single query provides a quick procedure for finding the most significant documents from the corpus, and depending on the search logic used at the searching function of the document corpus, may yield different results from querying the corpus on a term-by-term basis.

In another aspect of invention embodiments, there is provided: an apparatus for assessing the similarity of two concepts from different ontologies, the apparatus comprising: a core list obtaining unit configured, for each concept being assessed, to obtain a core list comprising a label of the concept and each concept that is a parent or ancestor of the concept; a generalisation processing unit configured, for each concept being assessed, to perform a generalisation process including the steps of: querying a document corpus with each of the labels from a list, and obtaining a query result identifying the one or more most relevant documents; compiling a textual description of the concept by obtaining at least a portion of each of one or more of the most relevant documents; and identifying a set of most significant terms in the textual description; wherein, the list in the performing of the generalisation process is the core list. The apparatus further comprises: a comparator configured to perform a comparison of the sets of most significant terms of the two concepts to obtain an indication of the similarity between the two concepts.

Invention embodiments may further include a computer program which, when executed by a computer, causes the computer to perform a method embodying the present invention.

In addition, invention embodiments may include a computer program which, when executed by a computer, cause the computer to function as an apparatus embodying the present invention.

It should be understood that features described in relation to one aspect of the present invention may be applied to other aspects.

A detailed description of invention embodiments will now be set out, with reference to the accompanying drawings, in which:

FIGURE 1 is an illustration of two different ontologies which may be mapped against one another;
FIGURE 2 is a flowchart representing a method embodying the present invention;
FIGURE 3 illustrates a concept hierarchy;
FIGURE 4 is an overview of a system architecture in which embodiments of the present invention may be implemented;
FIGURE 5 is a detailed diagram of a system embodying the present invention;
FIGURE 6 is a flowchart giving an overview of a method embodying the present invention;
FIGURE 7 illustrates an exemplary generalisation process in an embodiment of the present invention; and
FIGURE 8 illustrates another exemplary generalisation process in an embodiment of the present invention.

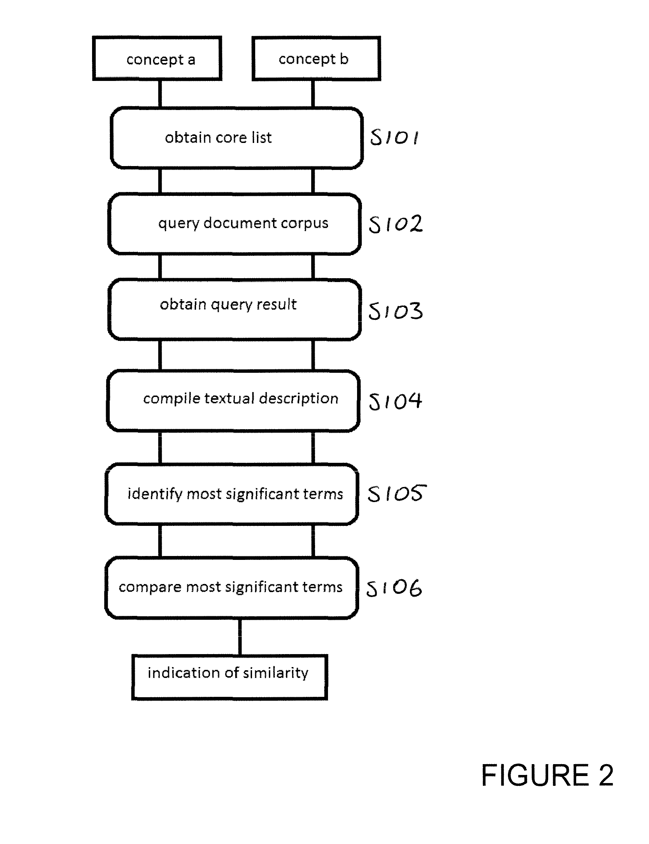

Figure 2 is a flowchart representing a method or process. The inputs to the process are concepts a and b. It can be seen from the parallel lines running down through process steps S101 to S106 that the process steps S101 to S105 are performed for concept a and concept b separately, and that the output of S105 for each concept is compared at S106 to produce a resulting indication of similarity as the output of the process.

Concepts a and b are from different ontologies. The concepts are compared, or assessed for similarity, as part of a mapping process of one ontology onto another. A mapping process takes each of the concepts of a source ontology and finds the concept from a target ontology that it is most similar to. Equivalence links or other forms of mapping are then generated in order that the two ontologies and the datasets characterised against them become interoperable.

An ontology is a model of concepts and relationships between concepts in a domain, against which model data items (instances) representing entities in the domain are classified. That is to say, data items representing entities in a domain are classified according to the ontology of the domain, as an instance or instantiation of a concept in the domain. A group of data items may be referred to as a dataset.

At step S101, a core list is obtained. The core list is a list of the labels of the concept itself and all of those concepts which are parents or ancestors of the concept. The ontology, and indeed datasets categorised against the ontology, may be stored as a graph database. A graph database is a data representation which employs nodes and edges (or arcs) to represent entities (concepts and/or instances), and arcs between nodes to represent relationships between those entities. The core list may be stored at the node on which the concept is stored, in which case obtaining the core list may include reading the core list from the node on the graph database. Otherwise, obtaining the core list may include deriving the core list by following subsumption relationships from the concept node and reading the labels of the nodes connected to the concept node by one or an unbroken series of subsumption ("is-a" relationships) edges directed away from the concept node (or in whichever direction denotes a child to parent relationship).

Optionally, some processing of the labels may be performed in order to remove syntactic and concept information, to leave only the semantic information of the name of the concept itself. For example, in a URI, all information other than the part of the label coming after the right-most "/" may be removed, and any extension information may be removed.

At step S102 a document corpus is queried with each of the labels from a list, and at S103 a query result identifying the one or more most relevant documents is obtained. In this particular embodiment, the list in question is the core list corresponding to the concept. However, in certain embodiments steps S102 to S106 are repeated with an "extended list" of labels, including the labels of neighbouring nodes (which labels may have been subjected to processing) in addition to the labels in the core list.

The document corpus may be an encyclopaedia or some other knowledge-base that is accessible to the apparatus carrying out the method of the embodiment. The document corpus may be accessible via an API. The query is a query to find the most relevant documents to the label or labels forming the subject of the query. The assessment of relevance in this step may be external to the embodiment and carried out by the document corpus or its querying application. For each list, a single query may be sent to the document corpus with a concatenation of the labels in the list, or each label may be sent as a separate query. At step S103, the results are obtained. Depending on the nature of the query, some further processing may be required at S103 to consolidate the query results into a list (possibly an ordered list) of documents (or references to documents) deemed the most relevant to the labels in the list. This may be, for example, the top n documents in terms of relevance to the labels on the list as a whole or the top n relevant documents to each label in the list.

At step S104 a textual description of the concept is compiled by obtaining at least a portion of each of the documents deemed the most relevant to the labels in the list. For example, it may be that documents are abstracted, and that the abstract section of each document is obtained and added to the textual description. Alternatively or additionally, it may be that an introduction or other such section is identifiable, for example via markup of the documents in the corpus, and that the introductions are compiled in the textual description. Alternatively or additionally, the first paragraph, or first fixed number of words in the document may be obtained and added to the textual description. As a further alternative technique, the entire document may be included in the textual description. Of course, a combination of the techniques in this paragraph may be used, for example, the techniques may be placed in a predetermined ordered list so that a technique is used only if those higher on the list were not successful in identifying a portion of the document. A document in this sense may be taken to mean a collection of text stored as a description of a particular concept or entity.

At step S105, the textual description is analysed to identify the most significant terms therein. Many techniques exist for finding the most significant terms in documents, and established natural language processing algorithms can be used in this step. For example, finding term frequency-inverse document frequency (tf-idf) weightings and taking the top n terms. Finding the most significant terms may include taking each document portion separately, and finding the top tf-idf weighted terms from that document portion, in which the document portion is used to find the term frequency and either the document corpus as a whole or the textual description as a whole is used to find the inverse document frequency. Alternatively or additionally, finding the most significant terms may include finding the top tf-idf weighted terms in the textual description by using the textual description as a whole to find the term frequency, and the documents corpus as a whole to find the inverse document frequency. Identifying the most significant terms may further comprise finding the synonyms for each of the most significant terms, and including the synonyms in the set of most significant terms for each concept.

Thus, the output of S105 is a set of most significant terms for each concept a and b. At step S106, the two sets of most significant terms are compared and an assessment of the similarity between the concepts a and b obtained as a result. Many established techniques exist for assessing the similarity between sets of terms. A technique for assessing the similarity between two sets of terms is set out in more detail later in this document. The comparison may take into account the tf-idf weighting attached to each term, or some other numerical score or other quantification of the significance of the term to the concept. For example, latent semantic analysis could be used to modify the tf-idf weights. The sets of most significant terms may be presented as vectors or matrices, possibly including the quantification of significance of the term. Such vectors or matrices could then be compared geometrically, for example by using a cosine similarity equation.

The output of step S106 is an indication of similarity between the two concepts, which may be presented as a numerical score, for example a figure between 0 and 1. In addition, the numerical score may have some uncertainty or estimate of error associated with it. In some embodiments, the indication of similarity may be compared with a threshold, and, if it exceeds the threshold, the steps S102 to S106 repeated with the extended list and a new indication of similarity obtained. Either or both indication of similarity may be used to establish the most similar concept from a target ontology to a concept from a source ontology, by performing the method on a repeated basis to assess a concept from the source ontology for similarity with each concept of a target ontology.

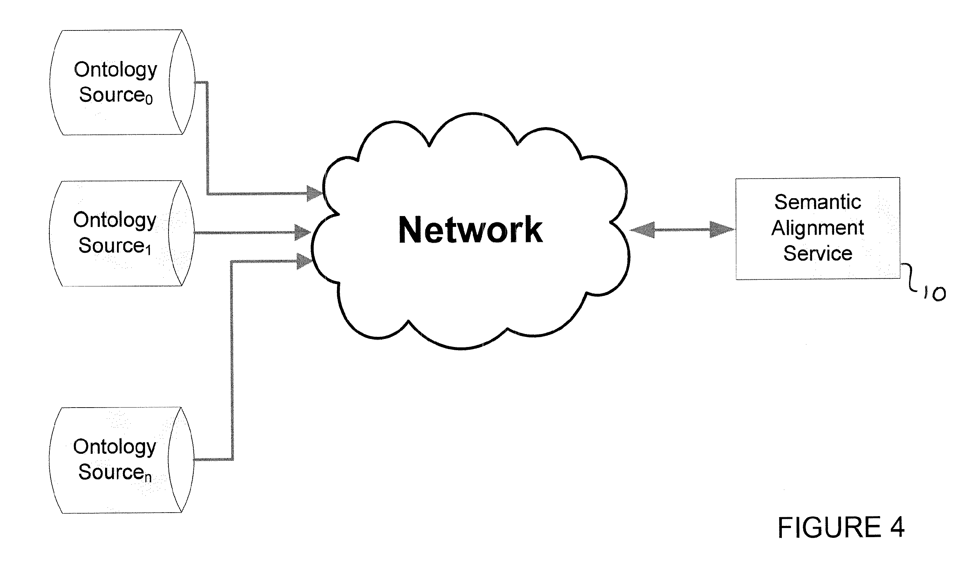

Figure 4 gives an overview of a system architecture in which embodiments of the present invention may be implemented. The semantic alignment service 10 is connected to storage units (ontology source) on which ontologies are stored over a network. Embodiments of the present invention provide an ontology/semantic alignment service 10 over a communication network (being any type of network implementation). Ontologies pooled from different sources are mapped by the alignment service, which disseminates results of the mapping over the communication network.

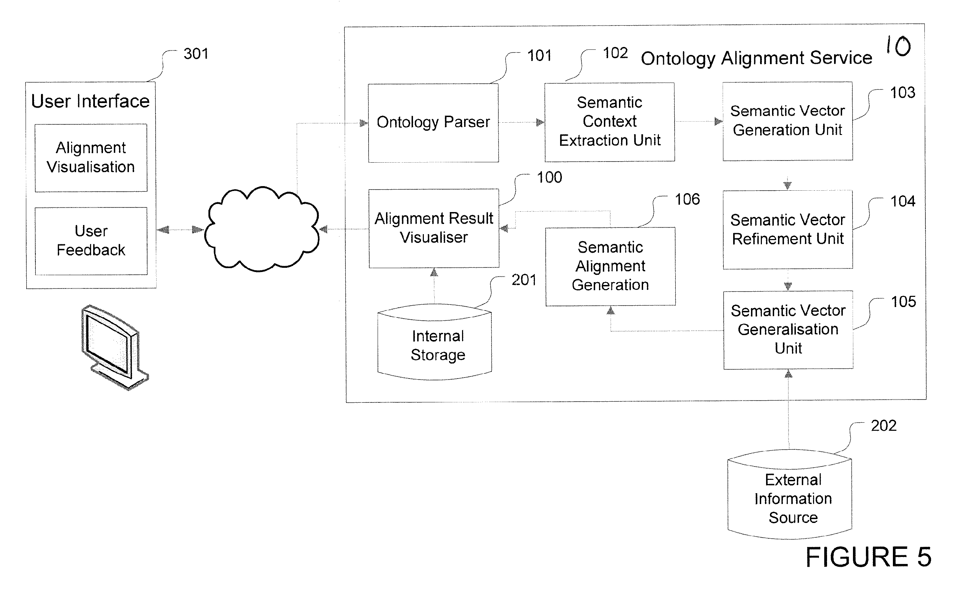

Figure 5 gives a detailed system diagram of an ontology alignment service 10 embodying the present invention. Furthermore, the system optionally comprises a user interface 301, and is connectable to an external information source 202. We note that in certain implementations, embodiments may include the external information source 202. Ontology parser 101 receives an ontology over the network and performs basic ontology parsing functionality to identify concepts, properties, instances and other axioms. Ontology parser 101 is also responsible for scoping namespaces (widely used as the prefix of names of ontological entities in LOD). Ontology parser 101 is configured to perform its function for each ontology being mapped. Semantic context extraction unit 102 analyses the ontology and extracts the semantic context of concepts as detailed in following sections. The output of the semantic context extraction unit 102 may include a concatenated string including all the concept names in a concept's semantic context. The semantic vector generation unit 103 converts the output from the semantic context extraction unit 102 into a string vector (exemplary of the core list mentioned elsewhere in this document, or Tcore) or the extended semantic vector (exemplary of the extended list mentioned elsewhere in this document, or Text). The semantic vector refinement unit 104 refines the initial semantic vectors with standard natural language processing techniques to remove context and syntactic information and to leave only the semantic information of the names of the concept labels. The units 101, 102, 103 and 104 may be collectively referred to as a core list obtaining unit, exemplary of the core list obtaining unit mentioned elsewhere in this document. The semantic vector generalisation unit 105 receives the refined vector from the semantic vector refinement unit 104 and generalises the refined semantic vector by querying one or more external document corpora (external information source 202). The semantic vector generalisation unit 105 is exemplary of the generalisation processing unit mentioned elsewhere in this document. The resultant semantic vectors are then utilised by the semantic alignment generation unit 106 for rapid alignment. The semantic alignment generation unit 106 is an example of the comparator mentioned elsewhere in this document. In fact, the processing of units 101 to 105 may be repeated for each concept in both a source ontology and a target ontology, which are from different sources, so that the semantic alignment generation unit 106 is able to compare each concept in the source ontology with every concept in the target ontology, assess their similarity, and identify to which concept of the target ontology each concept in the source ontology is most similar. As an optional extension, during the entire process, an internal storage unit 201 may be used to store interim results which are later read out for comparison or further processing. There is no restriction on the internal storage implementation. Results of alignment may be delivered either to a software application for further utilisation or even to human inspectors via a user interface 301. In spite of the fact that embodiments of the present invention are configured to run autonomously and without the need for human interaction, some knowledge engineers may prefer to retain the option to check and modify mapping results via an interface 301.

We now present possible interpretations of definitions and basic concepts used in this document, in case such definitions may be useful in aiding the understanding of this document by a third party.

In order to make the proposed approach generic, we represent ontologies as labelled directed acyclic graphs.

Definition 1. A ontology O is a rooted labelled directed acyclic graph. O is represented as a 4-tuple $(V,E,L_v,L_s)$, where V is a finite set of nodes, each of them is uniquely identified by an node identifier $L_v$, E is a finite set of edges identified by $L_s$. $L_v$ and $L_s$ are finite sets of labels.

Next, we define the semantic context of a node and its extended definition in an ontology O. A semantic context of a node (wherein a concept is exemplary of a node) is represented by its semantic of its ancestors while its extended definition also includes the semantic of its neighbouring nodes that are not parents or ancestors. The ancestors node reflect its basic structure, while the neighbour nodes reflect the node's content. In order to construct the semantic context of a node, we consider the labels of the ancestors (ancestors is taken to include parents) as well as the node itself. Formally, we introduce the definition of the semantic node context $\Theta_{core}(v)$ as follows: Definition 2. Given a ontology $0 = (V,E,L_v,L_s)$, the semantic context of a node $v \in V$ is given by $\Theta_{core}(v) = \{L_v\} \cup \{L_P | (v,p) \in \text{is-a}^*\}$

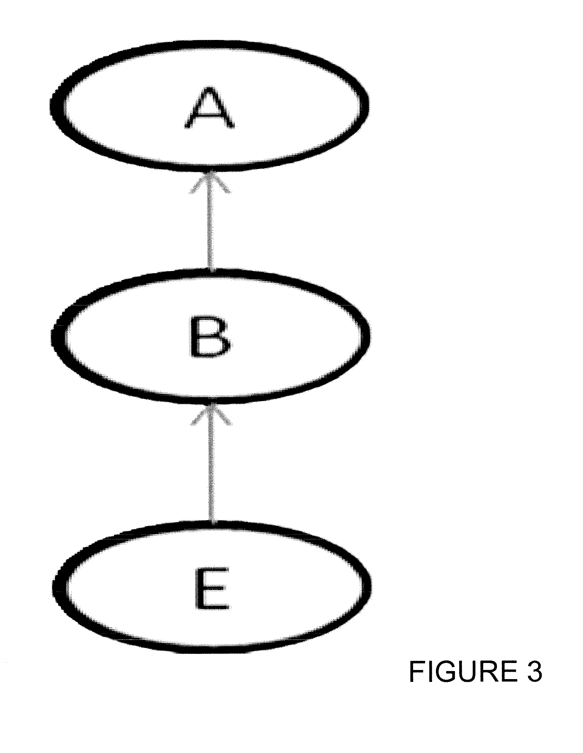

The semantic node context of $v$ is its own label together with the labels of all the concepts that are its parent concepts or ancestors (connected to $v$ through one or more is-a relationships). The name the super-nodes are concatenated to the local name of the node. For example, for a concept hierarchy shown in Figure 3, the core context of concept $E$ is concatenated string $E\ B\ A$. We note that $\Theta_{core}(v)$ may also be considered to be the core list corresponding to the concept at node $v$, and depending on the implementation details, Tcore mentioned below may also be considered to be exemplary of that core list, albeit at a later stage of the process when more processing has been performed.

For each concept, the approach in embodiments is to construct a term vector (exemplary of a set of most significant terms mentioned elsewhere in this document), which can be compared each other to measure the distance and establish a mapping. A detailed description of a method embodying the present invention is set out below:

The approach accepts as input two ontologies. It then proceeds with the following steps:

- Data preparation of the input ontologies in order to remove property restrictions, individuals, and attributes, and collapse all the super concepts, including:

    - Data preparation of the input ontologies in order to simplify the ontology structure; and
    - Constructing core semantic context (exemplary of the core list mentioned elsewhere in this document) and extended semantic context (exemplary of the extended semantic context mentioned elsewhere in this document) for each concept, by caching locally the concatenation of the names of super concepts and/or immediate neighbouring nodes that are not ancestor of the concept respectively.

In the first two steps, ontological entities are "parsed" and simplified so as to be suitable for large scale ontology matching in a distributed manner. That is to say, once the core semantic contexts and/or extended semantic contexts have been stored with the concepts, the processing tasks of generalisation and comparison can be performed in a distributed manner. The procedure continues as follows:

- Construction of the semantic vector in $\Theta_{core}$ and in $\Theta_{ext}$ for each class name $C$, using information from Wikipedia or other document corpora;
- Calculation of the distance between semantic vectors to be translated into ontology mapping.

Further details will now be provided on certain parts of the process.

Ontologies, normally characterised as graphs, may first go through one or more data preparation steps, including preparing the ontology for the next stages of the mapping process. This data preparation may include one or more of the following actions, depending on the implementation:

Structure cleansing:

- remove all the property restrictions from the concepts;
- remove all the instance data associated with the concept.

Syntax cleansing: using basic Natural Language Processing (NLP) techniques:

- tokenise the concept names;
- perform stop word removal based on predefined dictionary;
- stemming;
- removing namespace(s).

Tokenisation may also involve applying straightforward algorithms to the ontology or concept labels in order to normalise each input concept name C into a string C' obtained by replacing underscores and hyphens by spaces, splitting at capital letters, etc.

Embodiments capture the meaning of concepts with a vector of terms as a description of the meaning of the concept. The vectors are initially a core list (core semantic context) or extended list (extended semantic context), comprising just the name parts of the concept itself, parent/ancestor concepts, and in the case of the extended list, neighbouring concepts (concepts other than the parents connected to the concept by a single relationship). Further on in the process, the core list and extended list are optionally refined, and then generalised into a set of most significant terms (term/semantic vector).

The next step is, therefore, to construct the core semantic context ($\Theta_{core}$) and possibly also its extended version by pooling semantic-bearing information together and caching it locally at the concept. During the construction of semantic context of a concept, its super concepts are collapsed with the names being concatenated to the local concept name. By extending the local concept name with those from the super (ancestor) concepts, the semantic context of local concept becomes more evident. This step is beneficial, for example, due to the existence of polysemy. For instance, "Conference Chair" can refer to furniture or a person. When the super concepts are included, the true meaning of "Conference Chair" becomes more evident.

During the construction of the extended semantic context ($\Theta_{ext}$), the local caches will also include the information of the neighbouring nodes that are not ancestors. Therefore, $\Theta_{core}$ collects all the semantic-bearing information only upward along the subsumption hierarchies (in addition to the name/label of the concept itself) while $\Theta_{ext}$ contains the names of all the ancestors of the concept C as in $\Theta_{core}$ together with the names of child concepts and those from all the concepts linked to C through so-called object properties. In RDF, this may be achieved, for example, by querying the graph representing the ontology with patterns $\langle C,*,?\rangle$ and $\langle ?,*,C\rangle$. Note that labels or names of properties are ignored when constructing $\Theta_{ext}$. Only the names of property-neighbouring concepts are exploited. That is to say, the nature of the relationship between the concept node and a neighbouring node is ignored, only the name of the neighbouring node is taken into account in embodiments.

As a result of the data preparation performed on the ontology, instead of the normal graph representation, a representation of the ontology may be considered to be a tree or forest like structure. The next step of compiling/constructing the core semantic context may be considered to be collapsing downward the conceptual hierarchies along the tree paths into concept local caches where parents/ancestors are explicitly associated with the target concepts.

When collapsing all the super concepts, only the concept names or labels are used. It is observed that in existing mapping approaches which are designed to take into account syntactical, linguistic, structural and extensional similarities, in the end string comparison is the foundation for computing all the available similarity measures. It is also observed that even though there is not a universal naming standard for ontology concepts from the Internet, still knowledge engineers or ontology authors tend to use meaningful noun phrases for concepts and maintain the conceptual hierarchies relatively rigorously.

Along the taxonomy or conceptual hierarchy, ancestors and descendents contribute to the semantic restriction of a concept differently. This difference is quantified using weights associated with terms from super or sub concepts.

For super-concepts (parents and ancestors), the weights are computed as:

$$w^s = \frac{2 * \lg d(b)}{\lg d(b) + \lg d(a)}$$

where $d(x)$ gives the depth of a concept in the conceptual hierarchy, i.e. the length of the shortest path from concept x to the root of the hierarchy and as *b* is a super concept of *a*.

For sub-concepts (children and descendants), the weights are computed as:

$$W_s = \frac{2 * \lg d(a)}{\lg d(b) + \lg d(a)}$$

where $d(x)$ is defined as in previous formula and as *b* is a sub-concept of *a*.

Property-neighbouring concepts are assumed to contribute equally to the semantic restriction of a concept. The weight is then defined as

$$w^P = \frac{1}{|P|}$$

where $|P|$ gives the total number of "object" properties defined on the concept.

The labels or names extracted from the labels in the core and extended semantic contexts are used to query an information source to identify documents relevant to each name. Most significant terms from the identified documents, or portions of the documents, can be included along with the names which were the subject of the query in a semantic vector. Semantic vectors (also referred to as sets of most significant terms, or vectors of terms elsewhere in this document) are sets of strings, and hence enable semantic information to be passed around a system and between ontologies by simply transporting strings. The impact on network traffic is therefore minimised.

An exemplary process for transforming the lists of names/labels (core list/extended list/core semantic context/extended semantic context) into sets of most significant terms (term vectors/semantic vectors) is set out below:

Semantic Vectors are generated as follows:

1. Construct the initial core set of terms describing the concept $C$ ($T_{core}$) The concept names in $\Theta_{core}$ is parsed with standard Natural Language Processing methods, e.g. phrase tokenisation, stop words removal, and stemming. When a URL or URI are present, only local names are used for extracting items in $T_{core}$. $T_{core}$ will not be used directly in semantic alignment but serves as the input leading to a semantic vector that is generalised by querying an information source such as a document corpus and processing the results. $T_{core}$ may be considered to be a processed version of the core list. The same processing may be performed on $\Theta_{ext}$ in step 2.

2. Construct initial extended set of terms describing the concept $C(T_{ext})$ Similarly concept names in $\Theta_{ext}$ is processed to obtain $T_{ext}$.

3. Generalise $T$ (referring to either or both $T_{core}$ and $T_{ext}$) into Semantic Vector ($\Omega$) with co-occurring terms

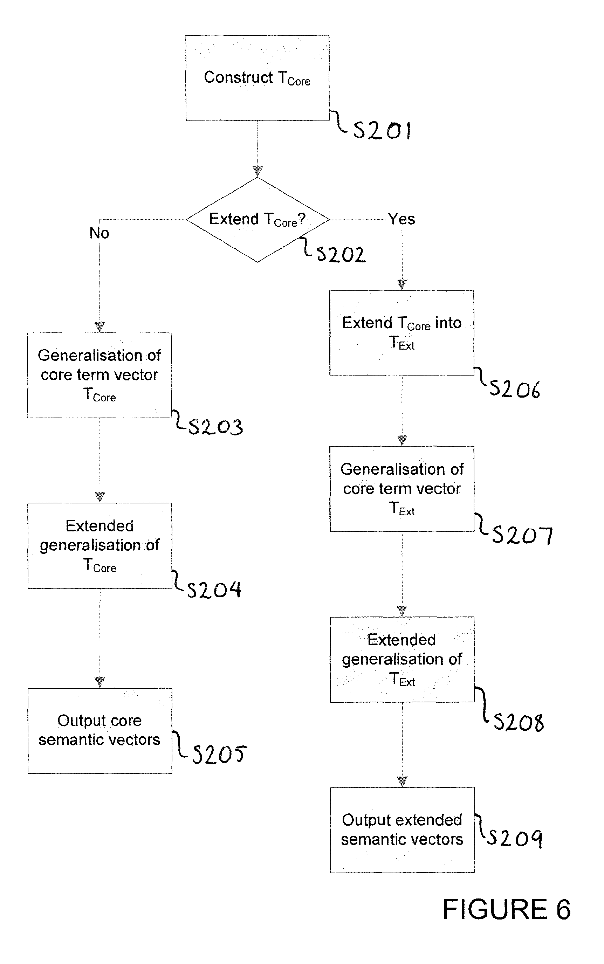

Terms in $T$ still bear significant influence of naming conventions particular to the ontology from which they originate. The generalising step reduces the influence of local naming conventions and generalises all the terms and minimises the influence of idiosyncrasy. The initial $T$ s are extended with terms that co-occur in documents in the document corpus or other external information source with the terms in $T$. The frequently co-occurring terms can be obtained in many different ways. In the present example, Wikipedia is used as the corpus for drawing such terms. In the end, generalisation functions map $T_{core}$ and $T_{ext}$ into semantic vectors: $G : T_{core} \rightarrow \Omega_{core}$ any $G'$: $T_{ext} \rightarrow \Omega_{ext}$ $G$ and $G'$ are the generalisation processes, and, once the core list or extended list are obtained, are largely similar or identical, as set out in Figure 6.

Figure 6 illustrates an overview of exemplary processing from taking the core list, or a refined/processed version thereof as an input, and generating the semantic vector as an output.

At step S201 the core list is constructed, and processing is performed to leave only the terms used to name the concept and its parents and ancestors. At S202 a decision is made as to whether to extend the core list. This may depend on the stage of the process, for example, extending the core list may be performed later if the semantic vector resulting from the core list matches a semantic vector from the target ontology to above a predetermined threshold. If the core list is not to be extended, then the flow proceeds to S203, at which the generalisation process is performed on the core list. The output is the set of most significant terms from the document corpus in terms of their relation to the concept. The flow then proceeds to S204, which is an optional step at which extended generalisation of the most significant terms is performed to add their synonyms to the set of terms. At step S205 the collection of terms is output as a core semantic vector, possibly also including some form of numerical score or other quantification of the relevance/significance of each term to the concept.

Alternatively or additionally, if it is decided at S202 to extend the core list into the extended list, then the flow proceeds to S206 at which the names of the neighbouring concepts are obtained and possibly refined in order to remove syntactic and context information. Steps S207-S209 are directly equivalent to steps S203-S205.

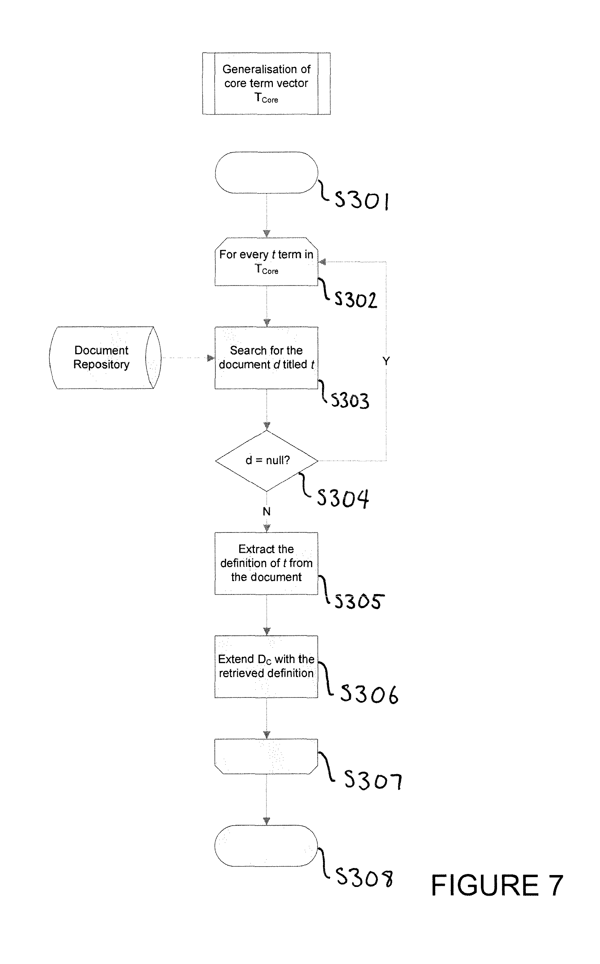

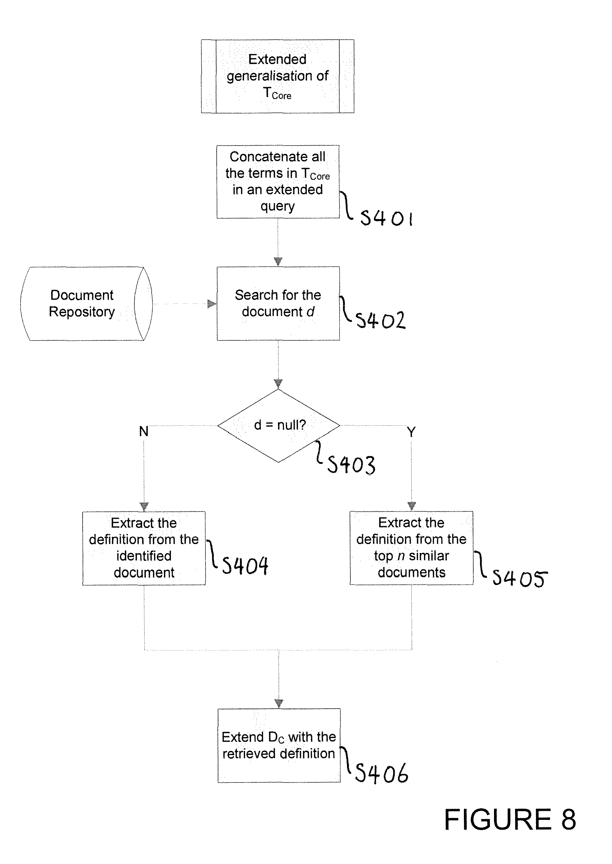

Step S203, which is directly equivalent to step S207, is set out in more detail in Figure 7. Step S204, which is directly equivalent to step S208, is set out in more detail in Figure 8.

Step S301 represents the beginning of the generalisation process. The input is the core list, which may alternatively be referred to as the core semantic context or Tcore. For every term (where term is taken to include names and labels, depending on the implementation) steps S302 to S304 are carried out, in which a document repository, which may be local or remote, is queried with the term t. The nature of the query may be that the document repository is searched for a document titled t, or with a title which is more relevant to t than any other title in the document repository. Alternatively, more than one document may be returned, for example, the top n most relevant documents. If no documents are returned, for example, because there is no document entitled t, or because no document or document title is deemed sufficiently relevant to t, the flow returns to S302. If a document or documents are returned or identified, then the flow proceeds to S305. At S305 a portion is extracted from each of the one or more relevant documents. For example, the portion may be the introduction, the abstract, or some other portion deemed to define t. Some further processing may be carried out to identify the most significant terms from the document portions, and those terms are added, possibly in association with a numerical score representing their relevance or significance to the concept, to a set of terms Dc, which can be used directly as $\Omega$core, or further refined to obtain $\Omega$core. At S307, the flow returns to S302 until every term t in the core list has been queried in the document repository. When the flow reaches S307 and there are no further terms in the core list, the flow proceeds to S308, and the generalisation process is complete, or some further generalisation of Dc is performed.

Figure 8 sets out in more detail an optional process which may be included in the generalisation of either a core list or a general list, in order to obtain more terms in the set of most significant terms or semantic vector. Although Figure 8 is illustrated with $T_{core}$, it should be understood that this could be directly swapped with $T_{ext}$. At step S401 the terms/names/labels from the core list are concatenated into an extended query, possibly separated by a space or a logical connector such as 'and' or 'or'. At step S402 the document repository is queried with the extended query. If the result of the query is null at S403, then the flow proceeds to S405 and further defining terms are extracted from the top n similar documents. If the result of the query is not null at S403 then the flow proceeds to S404 further defining terms are extracted from the identified document, using techniques set out elsewhere in this document for identifying significant terms in a document or document portion. Finally, the flow proceeds to step S406 at which the further defining terms are added to the set of most significant terms or semantic vector. Again, the terms may be associated with a numerical score or other quantification of their significance or relevance to the concept.

Terms in *T* are ontology-specific, i.e. they bear the modelling and naming conventions of a particular ontology. In order to minimise the influence of such a conceptual idiosyncrasy, terms in *T* are generalised using web repositories or other information sources. In this example, Wikipedia may be employed as a source of encyclopaedic knowledge, that is, as a document repository or document corpus. *T* is generalised as follows:

1. Use all the terms in *T* to retrieve the most relevant top *n* articles from Wikipedia repository. For each of the retrieved articles, the first paragraph of the article is extracted as the description that is pertinent to concept C. All the pertinent textual description of C is collected.

2. For each of the terms in T, a set of most significant terms to the concept C, $D_c$, is enriched as defined in Figure 6 (with details explained in Figure 7 and Figure 8). Note that both $T_{core}$ and $T_{ext}$ are treated in the same way when enriching.

As a result, each concept in the ontology is associated with a $D_C$ that serves as a set of terms deemed most relevant to the concept. Mapping of ontological entities from different ontologies is then reduced to the comparison of their associated $D_C$ s.

In order to further reduce the information that is necessary to compare when alignment ontological entities, $D_C$ may be subject to further linguistic refinement and other processing.

Firstly, a standard document indexing method is applied to obtain a term vector from all $D_C$ s of an ontology with tf-idf weights. Secondly, latent semantic analysis may be performed on the term-concept description matrix to fine tune the *tf-idf* weights. Thirdly, all the terms may then extended with their synonyms to further reduce their domain or ontology specificity. The synonyms can come from stand-alone repositories such as WordNet, and/or on-line dictionaries such as Wiktionary, and Thesaurus.com. The tf-idf weights may be calculated in combination with the weighting $w_s$ or $w^s$ attributed to the term in T which was searched to retrieve the term in Dc. That is to say, the tf-idf weighting of a term appearing in a document portion is combined with the weighting of the importance of the label/name from the core/extended semantic context forming the subject of the query in response to which the document was identified. Such a combination may be achieved, for example, by increasing the *tf* score by $w_s$ or $w^s$ for each appearance of a term when calculating the tf-idf. When a term in $D_c$ appears in the textual description for more than one term, the sum of the weights attributed to those terms will be used when calculating the tf-idf. Of course, in order to avoid total weights which exceed 1, the weights $w_s$ and $w^s$ may be normalised.

In the end, a term vector or semantic vector is produced for each concept and the items of the vector are weighted to reflect their contribution to the true meaning of the concept. This is referred to as $\Omega$. Of course, if only the core list was generalised and processed to obtain $\Omega$ then it may be denoted $\Omega_{core}$ - generalisation and optional further processing of the extended list produces $\Omega_{ext}$.

Once $\Omega$s are produced, ontology mapping is reduced to calculating the distance/similarity between two high dimensional vectors. The aim of the approach is to simply model concepts from source ontologies in vector notation and then apply a vector matching algorithm to estimate the degree of similarity among concepts from different ontologies. Similarity of the two vectors can be computed, for example, with the cosine of angle between those vectors. If the cosine of the angle is 1, the two vectors are exactly the same. As the cosine approaches 0, the similarity degree reduces.

Simple Cosine similarity can be used:

$$similarity(C_s, C_t) = \cos(\Omega_{C_s}, \Omega_{C_t}) = \frac{\Omega_{C_s} \cdot \Omega_{C_t}}{\|\Omega_{C_s}\| \|\Omega_{C_t}\|} = \frac{\sum_{i=1}^{n} t_i \times s_i}{\sqrt{\sum_{i=1}^{n} t_i^2} \times \sqrt{\sum_{i=1}^{n} s_i^2}}$$

The benefits of such an approach may include, among other benefits, the following:

    1. No need to retrieve the so-called structural semantics at the time carrying out ontology mapping and thus facilitate fast on-the-fly mapping.
    2. Mitigate the issues created by polynyme and synonyme when mapping ontologies constructed by different people and even in different natural languages.
    3. Facilitate cross language ontology mapping by leveraging a multilingual document repository
    4. Offer a well-defined and well-understood semantics of the mapping result.

Embodiments may also benefit from the flexibility of cross language ontology mapping. This is facilitated by the fact that Wikipedia articles, or articles in the document corpus used, are normally linked to those articles in different languages. If the target ontology is in different natural language from the source ontology when performing ontology alignment and the language of the target ontology is known, the $D_C$ enrichment will be extended to take into account articles in the target language. That is to say, in embodiments of the present invention, when the textual description of a term is compiled, if the document is linked to an equivalent document in a different natural language, then the equivalent document, or a portion thereof, is added to the textual description.

The $D'_C$ pools the concept descriptions of C in the target natural language and accordingly $T'_C$ c denotes the semantic vectors in a different natural language. $similarity(C_s, C_t)$ is updated to improve the result.

$$similarity'(C_s, C_t) = \frac{\cos\left(\Omega_{C_s}, \Omega_{C_t}\right) + \cos\left(\Omega'_{C_s}, \Omega'_{C_t}\right)}{2}$$

In order to further increase the computational efficiency, semantic alignment may be performed in two consecutive steps. Given a concept C from a source ontology, its semantic correspondence in target ontology is identified through scoping and fine-tuning.

An initial, scoping step, may be performed using the core list for the concept of those source ontology and the concepts of the target ontology. $\Omega_{core}$ of C is used to compute the similarity between concept C and each and every other concept in the target ontology. This is to indentify most promising candidates for further finer and more accurate alignment.

A second, tuning step, may be performed using the extended lists for the concepts which were identified as showing sufficient similarity in the initial scoping step. Using a predefined threshold of similarity or focusing on the top n similar concepts discovered in the above step, $\Omega_{ext}$ is used to find the best match against the extended semantic vectors of those selected concepts in the target ontology.

The separation between core and extended semantic vectors are based on the following considerations. Firstly, extended semantic vectors are expected to contain many more terms than the core vectors. Directly using the extended vectors may be deemed an inefficient use of computing resources. Secondly, conceptual hierarchies are expected to be more naturally in line with a common semantic interpretation of words and bear more resemblance to ones that are from other knowledge modellers. Thirdly, some modellers/knowledge engineers might opt for property constraints over hierarchical constraints when restricting down the semantics of a concept. This does not overturn any correspondences identified using $\Omega_{core}$ but rather serves as a further refinement of the results based on $\Omega_{core}$.

The ontology alignment processes embodying the present invention can be easily parallelised. Due to the fact that semantic vectors does not require runtime graph traversal along the subsumption hierarchies and property relationships, because core lists and extended lists are cached at nodes, both the source and the target ontologies can be distributed across multiple machines. Similarity calculation is done at concept level without runtime consultation of other related concepts. Therefore, the actually calculation can be performed in parallel by different machines no matter how the ontology is segmented in storage.

In summary, benefits provided by embodiments include:

- A method that reduces the semantic alignment into the calculation of distances in high dimensional space, enabling large scale ontology alignment and parallelisation of alignment process
- A framework that explicates the semantic of a concept and avoid expensive ontology queries at the time of semantic alignment
- A method that minimises the influence of naming and modelling variants among different individuals.
- A platform that implements the vector-based semantic alignment.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

**1.** A method for assessing the similarity of two concepts from different ontologies, the method comprising:

for each concept being assessed:

obtaining a core list comprising a label of the concept and each concept that is a parent or ancestor of the concept;
and performing a generalisation process including the steps of:

querying a document corpus with each of the labels from a list, and obtaining a query result identifying the one or more most relevant documents;
compiling a textual description of the concept by obtaining at least a portion of each of one or more of the most relevant documents; and
identifying a set of most significant terms in the textual description;

wherein, the list in the performing of the generalisation process is the core list;
the method further comprising:

performing a comparison of the sets of most significant terms of the two concepts to obtain an indication of the similarity between the two concepts.

**2.** A method according to claim 1, wherein:

identifying a set of most significant terms includes:

calculating a numerical score representing the significance of terms in the textual description; and
compiling a vector of terms including each of the most significant terms identified in the textual description in association with their respective numerical scores.

3. A method according to claim 1 or 2, wherein:

when the textual description of the concept is compiled, if the document is linked to an equivalent document in a different natural language, then the equivalent document, or a portion thereof, is added to the textual description.

4. A method according to claim 2, wherein:

the numerical score is based on a term frequency-inverse document frequency assessment, wherein the significance of the term is assessed by measuring the frequency of its usage in the textual description relative to the frequency of its usage in the document corpus as a whole.

5. A method according to claim 4, wherein:

the labels are attributed a weight in dependence upon the position of the concept to which they belong relative to the concept being assessed in an ancestry hierarchy of the concept being assessed;
each component document portion of the textual description is associated with the weight attributed to the label with which the document corpus was queried to return that particular document portion, or a sum of the weights if the same document portion was returned more than once; and
when calculating the term frequency-inverse document frequency for a term, the term frequency count is increased by an amount proportional to the associated weight or sum of weights of the document portion in which the term appears.

6. A method according to claim 2, wherein
compiling the vector of terms includes finding the synonyms of each of the most significant terms and including the synonyms in the vector of terms.

7. A method according to claim 2, wherein
the comparison is a geometrical comparison of the respective vectors of terms for the two concepts.

8. A method according to any of the preceding claims, further comprising receiving a copy of the two different ontologies as a source ontology and a target ontology, and assessing the similarity of each concept in the source ontology against each concept in the target ontology in order to identify, for each concept in the source ontology, the most similar concept in the target ontology.

9. A method according to any of the preceding claims, further comprising:

obtaining an extended list comprising the core list in addition to a label of each concept that is a neighbour of the concept.

10. A method according to claim 9, further comprising, if the indication of the similarity between the two concepts satisfies a predetermined criterion, for each concept being assessed:

performing the generalisation process with the extended list as the list, to identify an extended set of most significant terms;
the method further comprising:

performing a comparison of the extended sets of most significant terms of the two concepts to obtain a further indication of the similarity between the two concepts.

11. A method according to any of the preceding claims, wherein:

the ontologies are stored at storage units as graph databases, with each concept corresponding to a node of the graph database, and either or both of the core list and the extended list for each concept is stored at the corresponding node of the graph database.

12. A method according to any of the preceding claims, wherein:

the generalisation process further includes:

prior to the querying, performing a cleaning step including removing syntax and context information from the labels.

13. A method according to any of the preceding claims, wherein querying the document corpus includes:

querying the document corpus with each of the labels from the list individually, and, for each label, obtaining a query result identifying the one or more most relevant documents; and
consolidating the query results and identifying the one or more most relevant documents to the concept being assessed.

14. A method according to any of the preceding claims, wherein querying the document corpus includes querying the document corpus with each of the labels from the list concatenated in a single query.

15. An apparatus for assessing the similarity of two concepts from different ontologies, the apparatus comprising:

a core list obtaining unit configured, for each concept being assessed, to obtain a core list comprising a label of the concept and each concept that is a parent or ancestor of the concept;
a generalisation processing unit configured, for each concept being assessed, to perform a generalisation process including the steps of:

querying a document corpus with each of the labels from a list, and obtaining a query result identifying the one or more most relevant documents;
compiling a textual description of the concept by obtaining at least a portion of each of one or more of the most relevant documents; and
identifying a set of most significant terms in the textual description;

wherein, the list in the performing of the generalisation process is the core list;
the apparatus further comprising:

a comparator configured to perform a comparison of the sets of most significant terms of the two concepts to obtain an indication of the similarity between the two concepts.

**Amended claims in accordance with Rule 137(2) EPC.**

1. A method for assessing the similarity of two concepts from different ontologies, the method comprising:

for each concept being assessed:

obtaining a core list comprising a label of the concept and each concept that is a parent or ancestor of the concept;
and performing a generalisation process including the steps of:

querying a document corpus with each of the labels from a list, and obtaining a query result identifying the one or more most relevant documents;
compiling a textual description of the concept by obtaining at least a portion of each of one or more of the most relevant documents; and
identifying a set of most significant terms in the textual description by calculating a numerical score representing the significance of terms in the textual description, and compiling, as the set of most significant terms, a vector of terms comprising each of the top n most significant terms identified in the textual description in association with their respective

numerical scores;

wherein, the list in the performing of the generalisation process is the core list;
the method further comprising:

performing a comparison of the sets of most significant terms of the two concepts to obtain an indication of the similarity between the two concepts.

**2.** A method according to claim 1, wherein:

when the textual description of the concept is compiled, if the document is linked to an equivalent document in a different natural language, then the equivalent document, or a portion thereof, is added to the textual description.

**3.** A method according to claim 1, wherein:

the numerical score is based on a term frequency-inverse document frequency assessment, wherein the significance of the term is assessed by measuring the frequency of its usage in the textual description relative to the frequency of its usage in the document corpus as a whole.

**4.** A method according to claim 3, wherein:

the labels are attributed a weight in dependence upon the position of the concept to which they belong relative to the concept being assessed in an ancestry hierarchy of the concept being assessed;
each component document portion of the textual description is associated with the weight attributed to the label with which the document corpus was queried to return that particular document portion, or a sum of the weights if the same document portion was returned more than once; and
when calculating the term frequency-inverse document frequency for a term, the term frequency count is increased by an amount proportional to the associated weight or sum of weights of the document portion in which the term appears.

**5.** A method according to claim 1, wherein
compiling the vector of terms includes finding the synonyms of each of the most significant terms and including the synonyms in the vector of terms.

**6.** A method according to claim 1, wherein
the comparison is a geometrical comparison of the respective vectors of terms for the two concepts.

**7.** A method according to any of the preceding claims, further comprising receiving a copy of the two different ontologies as a source ontology and a target ontology, and assessing the similarity of each concept in the source ontology against each concept in the target ontology in order to identify, for each concept in the source ontology, the most similar concept in the target ontology.

**8.** A method according to any of the preceding claims, further comprising:

obtaining an extended list comprising the core list in addition to a label of each concept that is a neighbour of the concept.

**9.** A method according to claim 8, further comprising, if the indication of the similarity between the two concepts satisfies a predetermined criterion, for each concept being assessed:

performing the generalisation process with the extended list as the list, to identify an extended set of most significant terms;
the method further comprising:

performing a comparison of the extended sets of most significant terms of the two concepts to obtain a further indication of the similarity between the two concepts.

**10.** A method according to any of the preceding claims, wherein:

the ontologies are stored at storage units as graph databases, with each concept corresponding to a node of the graph database, and either or both of the core list and the extended list for each concept is stored at the corresponding node of the graph database.

**11.** A method according to any of the preceding claims, wherein:

the generalisation process further includes:

prior to the querying, performing a cleansing step including removing syntax and context information from the labels.

**12.** A method according to any of the preceding claims, wherein querying the document corpus includes:

querying the document corpus with each of the labels from the list individually, and, for each label, obtaining a query result identifying the one or more most relevant documents; and
consolidating the query results and identifying the one or more most relevant documents to the concept being assessed.

**13.** A method according to any of the preceding claims, wherein querying the document corpus includes querying the document corpus with each of the labels from the list concatenated in a single query.

**14.** An apparatus for assessing the similarity of two concepts from different ontologies, the apparatus comprising:

a core list obtaining unit configured, for each concept being assessed, to obtain a core list comprising a label of the concept and each concept that is a parent or
ancestor of the concept;
a generalisation processing unit configured, for each concept being assessed, to perform a generalisation process including the steps of:

querying a document corpus with each of the labels from a list, and obtaining a query result identifying the one or more most relevant documents;
compiling a textual description of the concept by obtaining at least a portion of each of one or more of the most relevant documents; and
identifying a set of most significant terms in the textual description by calculating a numerical score representing the significance of terms in the textual description, and compiling, as the set of most significant terms, a vector of terms comprising each of the top n most significant terms identified in the textual description in association with their respective numerical scores;

wherein, the list in the performing of the generalisation process is the core list;
the apparatus further comprising:

a comparator configured to perform a comparison of the sets of most significant terms of the two concepts to obtain an indication of the similarity between the two concepts.

FIGURE 1

Target Ontology

Source Ontology

concept a    concept b

obtain core list    S101

query document corpus    S102

obtain query result    S103

compile textual description    S104

identify most significant terms    S105

compare most significant terms    S106

indication of similarity

FIGURE 2

FIGURE 3

Semantic
Alignment
Service

10

Network

Ontology
Source$_0$

Ontology
Source$_1$

Ontology
Source$_n$

FIGURE 4

FIGURE 5

Construct $T_{Core}$

S201

Extend $T_{Core}$?

No

Yes

S202

Generalisation of core term vector $T_{Core}$

S203

Extend $T_{Core}$ into $T_{Ext}$

S206

Extended generalisation of $T_{Core}$

S204

Generalisation of core term vector $T_{Ext}$

S207

Output core semantic vectors

S205

Extended generalisation of $T_{Ext}$

S208

Output extended semantic vectors

S209

FIGURE 6

Generalisation of
core term vector
$T_{Core}$

S301

For every *t* term in
$T_{Core}$

S302

Document
Repository

Search for the
document *d* titled *t*

S303

d = null?

S304

Y

N

Extract the
definition of *t* from
the document

S305

Extend $D_C$ with the
retrieved definition

S306

S307

S308

FIGURE 7

Extended
generalisation of
$T_{Core}$

Concatenate all
the terms in $T_{Core}$
in an extended
query
S401

Document
Repository

Search for the
document $d$
S402

$d$ = null?
S403

N

Y

Extract the
definition from the
identified
document
S404

Extract the
definition from the
top $n$ similar
documents
S405

Extend $D_C$ with the
retrieved definition
S406

FIGURE 8

Europäisches
Patentamt

European
Patent Office

Office européen
des brevets

# EUROPEAN SEARCH REPORT

Application Number

EP 12 19 1695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Marc Ehrig ET AL: "Ontology Mapping - An Integrated Approach", , 31 December 2004 (2004-12-31), XP55059212, Retrieved from the Internet: URL:http://disi.unitn.it/~accord/RelatedWork/Matching/Marc.pdf [retrieved on 2013-04-11] * the whole document * | 1-15 | INV. G06N5/02 |
| X | ALEXANDRA MAZAK ET AL: "iweightings: Enhancing Structure-based Ontology Alignment by Enriching Models with Importance Weighting", COMPLEX, INTELLIGENT AND SOFTWARE INTENSIVE SYSTEMS (CISIS), 2010 INTERNATIONAL CONFERENCE ON, IEEE, PISCATAWAY, NJ, USA, 15 February 2010 (2010-02-15), pages 992-997, XP031657636, ISBN: 978-1-4244-5917-9 * the whole document * | 1-15 | |
| | | | TECHNICAL FIELDS SEARCHED (IPC) G06N |

The present search report has been drawn up for all claims

| Place of search | Date of completion of the search | Examiner |
|---|---|---|
| The Hague | 19 April 2013 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)